# EUROPÄISCHE PATENTSCHRIFT

(11) **EP 0 958 725 B1**
(45) Veröffentlichungstag und Bekanntmachung des Hinweises auf die Patenterteilung: **23.06.2004**
(21) Anmeldenummer: 99108453.4
(22) Anmeldetag: 30.04.1999
(51) Int. Cl.: A01C 15/04, A01B 73/04, A01C 7/20, A01M 7/00

(54) **Landwirtschaftliche Verteilmaschine**
Agricultural distributor
Distributeur agricole

(30) Priorität: 13.05.1998 DE 19821333
(43) Veröffentlichungstag der Anmeldung: 24.11.1999
(73) Patentinhaber: Amazonen-Werke H. Dreyer GmbH & Co. KG, 49205 Hasbergen (DE)
(72) Erfinder: Gattermann, Bernd Dipl.-Ing., 27798 Hude (DE); Feldhaus, Werner, 27801 Dötlingen / Geveshausen (DE)

(56) Entgegenhaltungen:
- DE-A- 3 117 786
- DE-A- 4 138 213
- US-A- 4 862 758

## Beschreibung

Die Erfindung betrifft eine landwirtschaftliche Verteilmaschine gemäß des Oberbegriffes des Patentanspruches 1.

Derartige Verteilmaschinen sind bekannt. Diese Verteilmaschinen weisen einen Mittelrahmen auf, der über Dreipunktkupplungselemente an einen Ackerschlepper angeordnet ist. An diesem Mittelrahmen sind seitlich in Transportstellung einklappbar angeordnete Seitenrahmen angeordnet, an denen Ausbringorgane, wie beispielsweise Säschare oder Düngersäschare, angeordnet sind. Diesen als Säscharen oder Düngersäscharen ausgebildeten Ausbringorganen wird das auszubringende Material über von einem ein Steigrohr aufweisenden Verteilorgan abgehenden Leitungen zugeleitet. Das Steigrohr ist mittels Halteelementen an Rahmenteilen der Verteilmaschine befestigt. Insbesondere, wenn im Rahmen des Baukastensystems verschiedene Ausbringorgane an eine Verteilmaschine angeordnet werden sollen, ist es sinnvoll, das Steigrohr den Rahmenteilen, an denen die Ausbringorgane angeordnet sind, zuzuordnen. Nun besteht jedoch das Problem bei einklappbaren Verteilmaschinen, daß beim Einklappen das Steigrohr mit verschwenkt wird, welches zu Problemen beim Einklappen führt.

Der Erfindung liegt die Aufgabe zugrunde, bei Verteilmaschinen mit einklappbaren Seitenrahmen, bei denen das Steigrohr den einklappbaren Seitenrahmen zugeordnet ist, das Steigrohr so anzuordnen, daß es beim Einklappen aufrecht stehend verbleibt.

Diese Aufgabe wird erfindungsgemäß durch die kennzeichnenden Merkmale des Patentanspruches 1 gelöst. Infolge dieser Maßnahmen wird in überraschend einfacher Weise eine vorteilhafte Anordnung des Steigrohres an den Seitenrahmen, die einklappbar sind, erreicht.

Eine besonders vorteilhafte Anordnung des Steigrohres ergibt sich dadurch, daß die Gelenkachsen der unteren Strebengelenke und der Seitenrahmengelenke zumindest annähernd in einer Fluchtlinie liegen.

Eine einfache Befestigung des Steigrohres an den Strebenelementen wird dadurch erreicht, daß die eine der Streben über das obere Strebengelenk hinaus in aufrechter Richtung verlängert ist, und daß an diesem verlängerten Strebenteil das Steigrohr bzw. das Verteilorgan befestigt ist.

Weitere Einzelheiten der Erfindung sind der Beispielsbeschreibung und den Zeichnungen zu entnehmen. Hierbei zeigen
- Fig.1: die Verteilmaschine, hinter einer Bodenbearbeitungsmaschine angeordnet, in Seitenansicht und in Prinzipdarstellung,
- Fig.2: die Anordnung des Steigrohres an den einklappbaren Seitenrahmen in der Ansicht II-II und
- Fig.3: die teilweise eingeklappte Verteilmaschine in der Ansicht II-II in Prinzipdarstellung.

Die Bestellkombination 1 besteht aus dem Bodenbearbeitungsgerät 2, der Bodenwalze 3 und der landwirtschaftlichen Verteilmaschine 4, die als Sämaschine ausgebildet ist. Die Bestellkombination 1 weist den zentralen Mittelrahmen 5 auf, an welchem quer zur Fahrtrichtung 6 nebeneinander die zwei Bodenbearbeitungsmaschinen 7 des Bodenbearbeitungsgerätes 2 in aufrechter Ebene schwenkbar angeordnet sind. Jeder Bodenbearbeitungsmaschine 7 ist über einen Rahmen 8 eine Bodenwalze 3 und eine Sävorrichtung 9, die Bestandteil der Verteilmaschine 4 ist, zugeordnet. An dem Rahmen 8 sind in aufrechter Ebene schwenkbar angeordnete Säschare 10 angelenkt. Hinter den Säscharen 10 ist ein Saatstriegel 11 angeordnet.

Der Rahmen 8 ist zusammen mit der Bodenwalze 3 und der Bodenbearbeitungsmaschine 7 um die in Fahrtrichtung 6 verlaufenden Achsen 12 jeweils einschwenkbar. Dieses Einschwenken erfolgt mittels zwischen dem Mittelrahmen 5 und der jeweiligen Bodenbearbeitungsmaschine 7 angeordneten, jedoch nicht dargestellten Hubelementen, die in bevorzugter Weise als Hydraulikzylinder ausgebildet sind.

Den Säscharen 10 wird über Leitungen 13, die von dem Verteilerkopf 14 abgehen, das Saatgut zugeführt. Diesem Verteilerkopf 14 werden von einem nicht dargestellten Vorratsbehälter über eine pneumatische Förderleitung, die in das Steigrohr 15 ausmündet, das auszubringende Material zugeführt.

Das Steigrohr 15 ist mittels der Halteelemente 16 an dem Rahmen 8 angeordnet. Das Halteelement 16 für das Steigrohr 15 besteht aus den beiden Streben 17 und 18. Die eine Strebe 17 ist an ihrem unteren Ende mittels des Gelenkes 19 an dem rechten Seitenrahmen 8' und die andere Strebe 18 an ihrem unteren Ende mittels des Gelenkes 20 an dem linken Seitenrahmen 8" angeordnet. Die Streben 17 und 18 sind in ihrem oberen Bereich mit dem gemeinsamen Gelenkbolzen 21 zusammengehalten. Die Gelenkachsen 22 und 23 der Strebengelenke 19 und 20 verlaufen parallel zu den Gelenkachsen der Gelenke, um welche die Seitenrahmen 8' und 8" mit der Bodenbearbeitungsmaschine 7 einklappbar sind. Die Gelenkachsen 22 und 23 der unteren Strebengelenke 19 und 20 und der Seitenrahmengelenke liegen in bevorzugter Weise in einer Fluchtlinie.

Die Strebe ist über das obere Strebengelenk 21 hinaus in aufrechter Ebene verlängert. An diesem verlängerten Strebenteil 24 ist das Steigrohr 15 bzw. der Verteilerkopf befestigt.

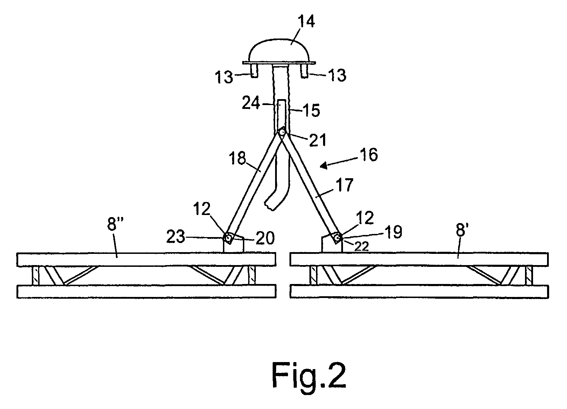

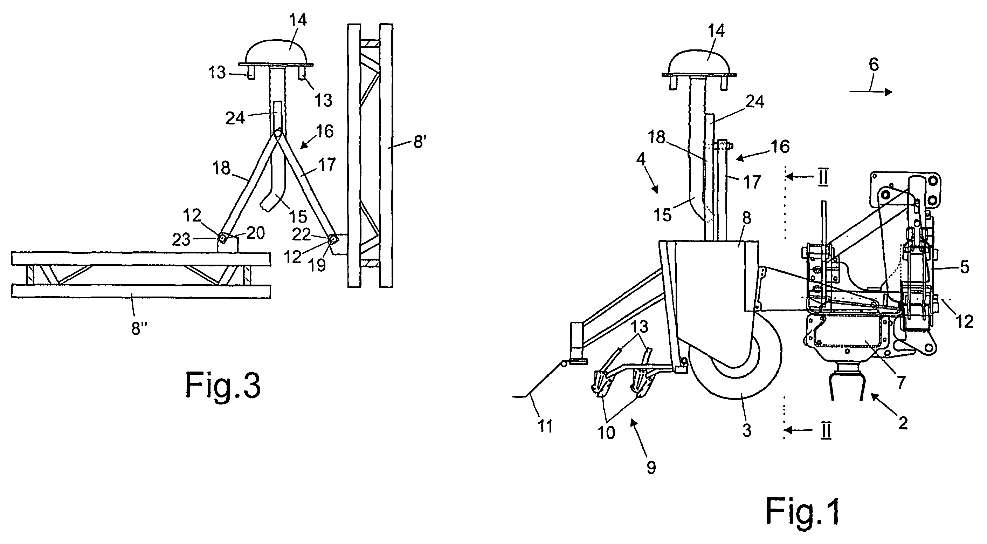

Aufgrund der Befestigung des Steigrohres 15 an den Strebenelementen 17 und 18, die scherenartig angeordnet sind und der Befestigung an den Gelenken 19 und 20 an den Seitenrahmen 8' und 8", wobei die Gelenkachsen 22 und 23 für die Streben 17 und 18 mit den Gelenkachsen 12, um welche die Maschinen 7 einklappbar sind, bleibt das Steigrohr 15 in aufrechter Ebene auch bei eingeklappter Maschine, wie die Fig.3 verdeutlicht, stehen.

## Patentansprüche

1. Landwirtschaftliche Verteilmaschine mit jeweils seitlich an einem Mittelrahmen in Transportstellung einklappbar angeordneten Seitenrahmen, an denen Ausbringorgane, wie beispielsweise Säschare oder Düngerschare, angeordnet sind, wobei den Ausbringorganen das auszubringende Material über von einem ein Steigrohr aufweisenden Verteilorgan abgehenden Leitungen zugeleitet wird, wobei das Steigrohr mittels Halteelementen an Rahmenteilen der Verteilmaschine befestigt ist, **dadurch gekennzeichnet, daß** die Halteelemente (16) zwei Streben (17, 18) aufweisen, daß die eine Strebe (17) an ihrem unteren Ende mittels eines Gelenkes (19) an dem einen Seitenrahmen (8') und die andere Strebe (18) an ihrem unteren Ende mittels eines Gelenkes (20) an dem anderen Seitenrahmen (8") angelenkt ist, daß die Streben (17, 18) in ihrem oberen Bereich mit einem gemeinsamen Gelenkbolzen (21) zusammengehalten werden, daß die Gelenkachsen (22, 23) der Strebengelenke (19, 20) parallel zu den Gelenkachsen (12) der Gelenke, um welche die Seitenrahmen (8', 8'') einklappbar sind, verlaufen, daß das Steigrohr (15) bzw. das Verteilorgan (14) an einer der Streben (17,18) mittels eines Halteelementes (24) angeordnet ist.

2. Verteilmaschine nach Anspruch 1, **dadurch gekennzeichnet, daß** die Gelenkachsen (22, 23) der unteren Strebengelenke (19, 20) und der Seitenrahmengelenke (12) zumindest annähernd in einer Fluchtlinie liegen.

3. Verteilmaschine nach Anspruch 1, **dadurch gekennzeichnet, daß** die eine der Streben (18) über das obere Strebengelenk (21) hinaus in aufrechter Richtung verlängert ist, und daß an diesem verlängerten Strebenteil (24) das Steigrohr (15) bzw. das Verteilorgan (14) befestigt ist.

## Claims

1. Agricultural distributor having side frames, which are each disposed laterally on a central frame so as to be pivotable upwards in the transport position, and on which side frame are disposed discharging members, such as, for example, sowing coulters or fertiliser coulters, wherein the material to be distributed is supplied to the discharging members via lines which extend from a distributor member, which includes a feed pipe, wherein,the feed pipe is secured to frame portions of the distributor by means of retaining members, **characterised in that** the retaining members (16) include two struts (17, 18), **in that** the one strut (17) is pivotally mounted at its lower end on the one side frame (8') by means of a pivot joint (19) and the other strut (18) is pivotally mounted at its lower end on the other side frame (8") by means of a pivot joint (20), **in that** the struts (17, 18) are held together in their upper region with a common pivotal pin (21), **in that** the pivot joint axes (22, 23) of the strut pivot joints (19, 20) extend parallel to the pivot joint axes (12) of the pivot joint, about which the side frames (8', 8") are pivotable upwards and **in that** the feed pipe (15) or respectively the distributor member (14) is disposed on one of the struts (17, 18) by means of a retaining member (24).

2. Distributor according to claim 1, **characterised in that** the pivot joint axes (22, 23) of the lower strut pivot joint (19, 20) and of the side frame pivot joint (12) lie at least approximately in a straight line.

3. Distributor according to claim 1, **characterised in that** the one of the struts (18) is lengthened beyond the upper strut pivot joint (21) in the upright direction, and **in that** the feed pipe (15) or respectively the distributor member (14) is secured to this lengthened strut portion (24).

## Revendications

1. Distributeur agricole comportant des châssis latéraux repliables, respectivement disposés latéralement au niveau d'un châssis médian en position de transport, au niveau desquels sont disposés des organes d'épandage, tels que par exemple des socs distributeurs de semis ou des socs distributeurs d'engrais, les organes d'épandage recevant la matière à épandre par le biais de conduites partant d'un organe de distribution présentant une colonne verticale, la colonne verticale étant fixée au moyen d'éléments de fixation à des parties de châssis du distributeur,
**caractérisé en ce que**
les éléments de fixation (16) présentent deux barres de renfort (17, 18), la première barre de renfort (17) est fixée de façon articulée au premier châssis latéral (8') au niveau de son extrémité inférieure au moyen d'une articulation (19) tandis que l'autre barre de renfort (18) est fixée de façon articulée à l'autre châssis latéral (8") au niveau de son extrémité inférieure au moyen d'une articulation (20), les barres de renfort (17, 18) sont maintenues ensemble dans leur zone supérieure à l'aide d'un tourillon commun (21), les axes d'articulation (22, 23) des articulations des barres de renfort (19, 20) s'étendent parallèlement aux axes d'articulation (12) des articulations autour desquelles peuvent être repliés les châssis latéraux (8, 8'), et la colonne verticale (15) ou l'organe de distribution (14) est disposé au niveau de l'une des barres de renfort (17, 18) au moyen d'un élément de fixation (24).

2. Distributeur selon la revendication 1,
**caractérisé en ce que**
les axes d'articulation (22, 23) des articulations inférieures des barres de renfort (19, 20) et des articulations des châssis latéraux (12) sont au moins approximativement alignés.

3. Distributeur selon la revendication 1,
**caractérisé en ce que**
la première des barres de renfort (18) est rallongée en direction verticale et dépasse alors l'articulation supérieure des barres de renfort (21), et la colonne verticale (15) ou l'organe de distribution (14) est fixé au niveau de cette partie de barre de renfort rallongée (24).
